Europäisches Patentamt

European Patent Office

Office européen des brevets

(19)

(11) Veröffentlichungsnummer : **0 065 311**
**B1**

(12) EUROPÄISCHE PATENTSCHRIFT

(45) Veröffentlichungstag der Patentschrift :
30.12.86

(51) Int. Cl.⁴ : **G 03 B 17/32**

(21) Anmeldenummer : **82104332.0**

(22) Anmeldetag : **17.05.82**

(54) **Planfilmkassette zur Aufnahme von zwei Filmen.**

(30) Priorität : **20.05.81 DE 3119977**

(43) Veröffentlichungstag der Anmeldung :
**24.11.82 Patentblatt 82/47**

(45) Bekanntmachung des Hinweises auf die Patenterteilung : **30.12.86 Patentblatt 86/52**

(84) Benannte Vertragsstaaten :
**FR GB IT**

(56) Entgegenhaltungen :
**EP-A- 0 051 248**
**DE-C- 150 708**
**DE-C- 285 555**
**US-A- 4 013 890**
**US-A- 4 074 297**
**US-A- 4 074 297**

(73) Patentinhaber : **AGFA-GEVAERT Aktiengesellschaft**

**D-5090 Leverkusen 1 (DE)**

(72) Erfinder : **Bauer, Walter**
**Heinrich-Wieland-Strasse 178**
**D-8000 München 83 (DE)**
Erfinder : **Färber, Heinrich**
**Dietlindenstrasse 9**
**D-8000 München 40 (DE)**
Erfinder : **Müller, Jürgen**
**Bozzarisstrasse 7**
**D-8000 München 90 (DE)**

EP 0 065 311 B1

## Beschreibung

Die Erfindung betrifft eine Planfilmkassette zur Aufnahme von zwei Filmen, mit auf beiden Flachseiten ausgeformten Belichtungsfenstern, welche durch je eine durch Schlitze einschiebbare, den Film in der Kassette lichtdicht abdeckende Lichtschutzplatte verschließbar sind, und mit einem die beiden Kassetteninnenteile bildenden Mittelstück.

Eine Planfilmkassette der eingangs genannten Art ist aus der US-PS-3 373 673 bekannt. Bei dieser bekannten Kassette wird zum Zwecke des Einbringens eines Filmes zunächst die Lichtschutzplatte aus dem Kassettenrahmen gezogen, sodann eine Klappe geöffnet und der Film in seitliche Führungen eingeführt. Dieser Vorgang ist umständlich und in der Dunkelkammer ist das Einführen des Filmes äußerst schwierig. Außerdem ist die bekannte Kassette durch die vielen Einzelteile, aus denen sie hergestellt ist, teuer im Aufbau.

Durch die US-PS-4 074 297 ist außerdem eine Kassette der eingangs genannten Art bekannt, die jedoch ebenfalls umständlich zu beladen ist. Durch die US-PS-4 013 890 ist eine Doppelkassette mit zwei Deckeln, jedoch ohne Belichtungsfenster und Lichtschutzplatten bekannt geworden, die nicht in den Geräten verwendbar ist, in denen Kassetten der eingangs genannten Art Verwendung finden. Wollte man die Vorteile der beiden letztgenannten, bekannten Kassettentypen miteinander in einer Kassette verbinden, so würde dies zu einer unpraktikablen Anhäufung von Scharnieren, Deckelverriegelungsmitteln und Lichtschutzplattenbedienungsmitteln an einer Kassettenseite führen, die nicht mehr lichtdicht ausführbar wäre.

Aufgabe der Erfindung ist es daher, eine Planfilmkassette der eingangs genannten Art zu finden, die preisgünstig in der Herstellung und vor allem einfach in der Handhabung ist.

Diese Aufgabe wird durch die Kennzeichen des Anspruchs 1 aufgeführten Mittel gelöst.

Mit der Erfindung wird erreicht, daß die Be- und Entladung der Kassette durch die Ausbildung der Oberteile als Deckel vereinfacht ist. Ob bei der Anwendung in der Medizin für Bildschirmaufnahmen oder als Filmkassette für Plattenkamera kann der Film ohne Herausziehen der Lichtschutzplatte und nur durch Öffnen des Deckels gewechselt werden. Durch die symmetrische Ausbildung vom Kassettenmittelteil können die Kassettenoberteile gleich ausgeformt sein, wobei die Planfilmkassette auch einfacher und billiger in der Herstellung wird. Aufgrund des aufklappbaren Deckels als Oberteil ist die Kassette auch geeignet, in einem Tageslichtsystem für eine automatische Be- und Entladung verwendet zu werden.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigen :

Figur 1 eine perspektivische Darstellung der erfindungsgemäßen Planfilmkassette ;

Figur 2 einen Querschnitt II-II durch ein in Fig. 1 dargestelltes Scharnier ;

Figur 3 einen Querschnitt III-III durch ein Verschluß-element ;

Figur 4 einen Längsschnitt IV-IV durch die Arretierung der in Fig. 1 dargestellten Lichtschutzplatte ;

Figur 5 einen Teillängsschnitt V-V durch die in Fig. 1 dargestellte Raste in nicht betätigtem Zustand ; und

Figur 6 den Teillängsschnitt nach Fig. 5, jedoch in betätigtem Zustand der Raste.

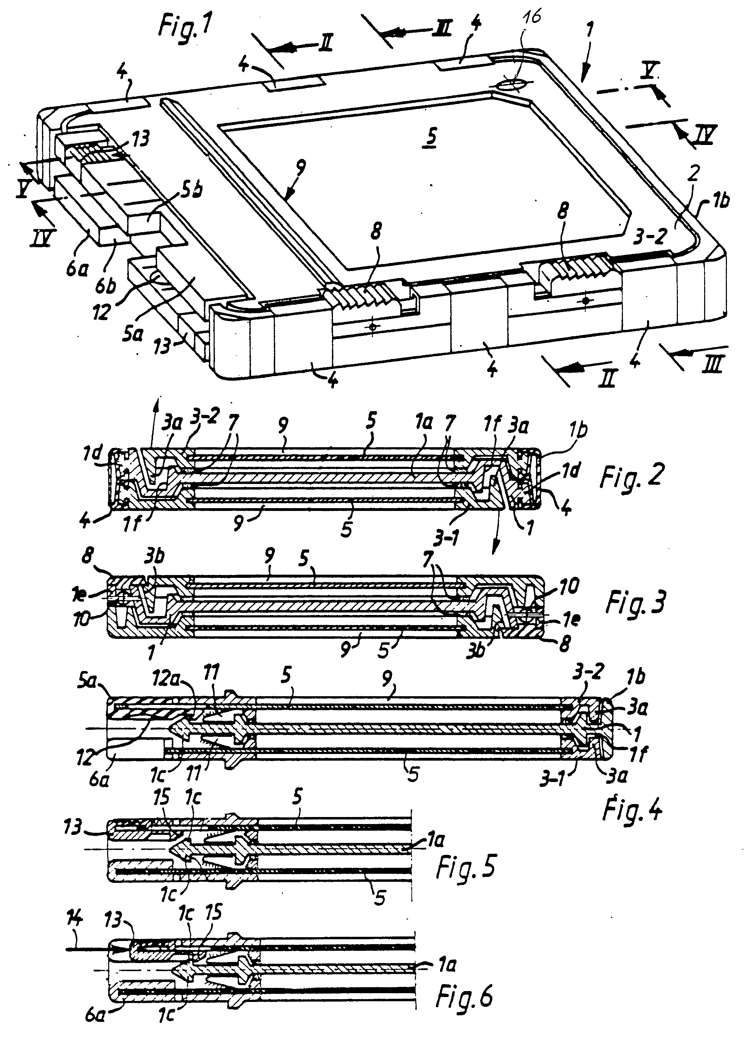

In den Fig. 1 bis 6 ist mit 1 ein Grundkörper oder Mittelstück bezeichnet, das im wesentlichen aus einem rechteckigen Bodenteil 1a, einem an einer Seite verlaufenden Kassettenrand 1b, Verschlußleisten 1c, Aufnahmeelementen für ein Scharnier 1d und Aufnahmeelementen für einen Verschluß 1e gebildet ist. Während die Verschlußleiste 1c gegenüber dem Rand 1b angeordnet ist, sind an den anderen beiden, dazu senkrecht verlaufenden Seiten sowohl die Scharnieraufnahme-elemente 1d als auch die Verschlußaufnahmeelemente 1e vorgesehen. Dabei sind die Scharnieraufnahmeelemente 1d (Fig. 2) und die Verschlußaufnameelemente 1e (Fig. 3) zueinander diametral auf den sich gegenüberliegenden Seiten ausgeformt.

Wie in Fig. 2 zu sehen ist, ist an dem linken, oben liegenden Scharnieraufnahmeelement 1d des Grundkörpers 1 ein Scharnier 4 angebracht, das andererseits mit einem ersten Oberteil 3-1 in Verbindung steht. Das auf der anderen Seite des Grundkörpers 1 befindliche, unten liegende Scharnieraufnahmeelement 1d ist ebenfalls mit einem Scharnier 4 verbunden, das andererseits mit einem zweiten Oberteil 3-2 zusammenhängt. Im geschlossenen Zustand liegt demnach das erste Oberteil auf der einen Flachseite des Grundkörpers 1 und das zweite Oberteil 3-2 auf der anderen Flachseite des Grundkörpers 1 an. Wie aus den Fig. 2 und 3 außerdem zu entnehmen ist, sind in dem Grundkörper 1 Labyrinthgänge 1f ausgebildet, in welchen zur Lichtabdichtung Vorsprünge 3a der beiden Oberteile 3-1 und 3-2 eingreifen. An der zum Mittelteil 1a weisenden Fläche der Oberteile 3-1 und 3-2 sind rundumlaufende, das Belichtungsfenster umgrenzende elastische Rahmen 7 angebracht, vorzugsweise aus Schaumstoff, welche bei geschlossener Kassette auf das flache Mittelstück 1a drücken.

In den Verschlußaufnahmeelementen 1e des Grundkörpers 1 sind Riegelpaare 8 angeordnet, welche, wie in Fig. 3 zu sehen ist, einen Vorsprung 3b am Oberteil hakenartig hintergreifen und damit das Oberteil in geschlossenem Zustand halten. Eine Zugfeder 10 hält dabei die Riegel 8 in Verschließzustand.

Wie ferner aus den Fig. 2 und 3 zu entnehmen ist, ist in dem Oberteil ein Belichtungsfenster 9 ausgeformt, in dessen Seitenränder Nuten vorgesehen sind, in welche Lichtschutzplatten 5 eingeschoben sind.

In Fig. 4 ist ein Längsschnitt durch die Planfilmkassette 1 dargestellt, wobei zunächst eine Griffleiste 5a der Lichtschutzplatte 5 zu sehen ist, die eine U-förmige, elastische Arretierung 12 aufweist, welche eine Nase 12a besitzt, die hinter eine der Verschlußleisten 1c des Grundkörpers 1 greifen kann. Durch die Elastizität der Arretierung 12 können die beiden U-förmigen Schenkel zusammengedrückt werden, so daß die Nase 12a aus dem Eingriff mit der Leiste 1c kommt. Wie aus der Fig. 1 zu entnehmen ist, weisen die beiden Griffleisten 5a und 6a der beiden Lichtschutzplatten 5 Aussparungen 5b bzw. 6b auf, welche zueinander versetzt sind und jeweils die Arretierung 12 der anderen Lichtschutzplatte freigeben. Mit der Arretierung 12 wird ein irrtümliches Ziehen an der Griffleiste 5a bzw. 6a und damit ein Belichten des eingelegten Filmes verhindert. Außerdem sind an den beiden Seiten des Grundkörpers 1 außerhalb des Belichtungsfensters 9 elastische, mit Plüsch belegte Leisten 11 zur Lichtabdichtung vorgesehen, welche bei herausgezogener Lichtschutzplatte 5 (im Aufnahmegerät) einen Lichteinfall in den den Film tragenden Raum verhindern. Auch ist auf der den Griffleisten 5a und 6a gegenüberliegenden Seite zwischen Grundkörper 1 und Oberteil 3-1 und 3-2 eine Lichtverschneidung 1f/3a vorgesehen.

An den Griffleisten 5a und 6a ist außerdem jeweils eine Schieberraste 13 vorgesehen, welche am besten aus den Fig. 1, 5 und 6 zu erkennen ist. Die Schieberraste 13 besteht im wesentlichen aus einem U-förmigen Bügel, welcher in der Griffleiste 5a bzw. 6a für eine Verschiebung in Pfeilrichtung 14 geführt ist. An dem U-förmigen Bügel ist ein Haken 15 ausgeformt, der ebenfalls mit der Verschluß leiste 1c am Grundkörper 1 zusammenwirkt. Eine zwischen Griffleiste 5a bzw. 6a und U-förmigem Bügel wirkende Druckfeder (nicht gezeigt) hält diesen in der in den Figuren 1 und 5 dargestellten Stellung. Beim Eindrücken der Schieberraste 13 bleibt diese mit ihrem Haken 15 hinter der Verschlußleiste 1c hängen und kann nur durch das Öffnen der Kassette wieder entrasten, denn nur dabei wird die Griffleiste 5a bzw. 6a und damit der Haken 15 aus dem Eingriff mit der Leiste 1c gebracht. Dies hat den Vorteil, daß nach einer Belichtung, zu welcher die Raste 13 von der Bedienungsperson gedrückt werden soll, die Lichtschutzplatte 5 nicht noch ein zweites Mal zu einer weiteren Belichtung herausgezogen werden kann. Außerdem dient die eingedrückte Taste 13 zur Anzeige der bereits erfolgten Belichtung. Die Anzeige kann dadurch verdeutlicht werden, daß die durch das Eindrücken der Raste 13 freiwerdende Fläche in der Griffleiste 5a bzw. 6a farblich hervorgehoben ist.

In den Oberteilen 3-1 und 3-2 kann ferner eine Filmanzeige 16 vorgesehen sein, welche beispielsweise die Form nach der deutschen Patentanmeldung DE-A-28 38 058/C2 haben kann.

Im Betrieb wird nun die Kassette zunächst in einer Dunkelkammer durch Betätigen der Riegelelemente 8 geöffnet, das Kassettenoberteil 3-2 angehoben und ein Film auf das Mittelstück 1a gelegt, sodann wird das Oberteil 3-2 geschlossen, wobei die elastischen Elemente 7 den Film an das Mittelstück 1a drücken. Durch Anheben der Kassette an den beiden Seitenrändern kann diese um 180° gedreht werden, so daß die diametral gegenüberliegenden Verschlußelemente der anderen Kassettenseite nun an der gleichen Stelle zu liegen kommen und die Beladung auf der anderen Seite in der gleichen Weise durchgeführt werden kann.

In einem Aufnahmegerät wird nun nach dem Einsetzen der Kassette die Arretierung 12 gedrückt und gleichzeitig die entsprechende Lichtschutzplatte 5 an der Griffleiste 5a herausgezogen. Die Schaumstoffleiste 11 drückt dabei mit ihrem Plüschbelag an die Innenseite des Oberteils 3-2, so daß der Einführschlitz im Oberteil für die Lichtschutzplatte lichtdicht verschlossen ist. Selbst bei nach unten gerichteter Kassette hält der elastische Rahmen 7 den Film auf dem Mittelstück 1a des Grundkörpers gespannt, so daß auch bei längerer Lage der Kassette in dieser Ausrichtung der Film sich nicht nach unten durchwölbt. Nach der Belichtung wird die Lichtschutzplatte 5 wieder eingeschoben und die Schieberraste 13 betätigt. Damit wird angezeigt, daß der erste Film in der Kassette belichtet ist und die Platte 5 kann nicht mehr entnommen werden. Für eine weitere Aufnahme kann nun die Kassette umgedreht werden und die Belichtung kann in der beschriebenen Weise erfolgen.

Erst in der Dunkelkammer oder in einer Einrichtung zum Be- und Entladen der Kassette wird diese in der oben beschriebenen Weise geöffnet, wobei die Schieberraste 13 wieder in ihre Ausgangslage zurückspringt.

## Patentansprüche

1. Planfilmkassette zur Aufnahme von zwei Filmen, mit auf beiden Flachseiten ausgeformten Belichtungsfenstern, welche durch je eine durch Schlitze einschiebbare, den Film in der Kassette lichtdicht abdeckende Lichtschutzplatte verschließbar sind, und mit einem die beiden Kasseteninnenteile bildenden Mittelstück, dadurch gekennzeichnet, daß an dem Mittelstück (1) an einer Seite ein erstes, die eine Flachseite bildendes Oberteil (3-1) und an der gegenüberliegenden Seite ein zweites, die andere Flachseite der Kassette bildendes und zum ersten gleichförmiges Oberteil (3-2) angelenkt sind, daß Verschlußelemente (8) an diesen beiden Seiten vorgesehen sind, welche jeweils mit demjenigen Oberteil (3-2 bzw. 3-1) zusammenwirken, das an der gegenüberliegenden Seite angelenkt ist, und daß je eine der beiden Lichtschutzplatten (5) in einem der Oberteile (3-1, 3-2) durch einen seitlichen Schlitz einführbar ist, wobei die Schlitze der beiden Oberteile in nur einer der zu den beiden die Anlenkmittel bzw. Verschlußelemente tragenden Seiten senkrechten Seiten angeordnet sind.

2. Planfilmkassette nach Anspruch 1, dadurch gekennzeichnet, daß das Mittelstück (1) an zwei einander gegenüberliegenden Seiten Aufnahmeelemente (1d, 1e) für Scharniere (4) und Verschlußelemente (8) aufweist, wobei diese Elemente auf beiden Seiten in in Bezug auf die andere Seite umgekehrter Lage angeordnet sind.

3. Planfilmkassette nach Anspruch 2, dadurch gekennzeichnet, daß die Oberteile (3-1, 3-2) mit den Scharnieren (4) verbunden sind, welche an den Scharnieraufnahmeelementen (1d) des Mittelstückes (1) hängen.

4. Planfilmkassette nach einem der Ansprüche 1 bis 3, dadurch gekennzeichnet, daß an dem Mittelstück (1) Labyrinthgänge (1f) vorgesehen sind, in welche an den Oberteilen (3-1, 3-2) ausgeformte Vorsprünge (3a) zur Lichtabdichtung eingreifen.

5. Planfilmkassette nach Anspruch 1, dadurch gekennzeichnet, daß die Lichtschutzplatte (5) eine Griffleiste (5a) aufweist, an welcher ein mit dem Mittelstück (1) zusammenwirkender Verriegelungsmechanismus (12, 12a) angebracht ist.

6. Planfilmkassette nach Anspruch 5, dadurch gekennzeichnet, daß der Verriegelungsmechanismus einen elastisch an der Griffleiste (5a) angeordneten Bügel (12) aufweist, an welchem ein eine Verschlußleiste (1c) am Mittelstück (1) hintergreifender Haken (12a) ausgeformt ist.

7. Planfilmkassette nach einem der Ansprüche 1 bis 6, dadurch gekennzeichnet, daß das Mittelstück einen im wesentlichen rechteckigen Boden (1a) zur Aufnahme des Filmes von beiden Seiten her aufweist, der der Filmgröße entspricht und etwas größer ist als das in jedem Oberteil (3-1, 3-2) ausgeformte Belichtungsfenster (9), und daß an der Innenfläche eines jeden Oberteils (3-1, 3-2) ein um das Belichtungsfenster (9) rundumlaufender, elastischer, im geschlossenen Zustand der Kassette auf den Boden (1a) des Mittelstückes (1) drückender Rahmen (7) angeordnet ist.

8. Planfilmkassette nach Anspruch 7, dadurch gekennzeichnet, daß der Rahmen (7) aus Schaumstoff ist.

9. Planfilmkassette nach einem der Ansprüche 1 bis 8, dadurch gekennzeichnet, daß die Lichtschutzplatte (5a, 6a) mit einer Schieberraste (13) verbunden ist, welche in betätigtem Zustand und bei eingeschobener Lichtschutzplatte (5a, 6a) ein Wiederherausziehen der Lichtschutzplatte aus dem Oberteil (3-1, 3-2) verhindert.

10. Planfilmkassette nach Anspruch 6 und 9, dadurch gekennzeichnet, daß die Schieberraste (13) in der Griffleiste (5a, 6a) integriert ist, einen mit der Verschlußleiste (1c) des Mittelstücks (1) zusammenwirkenden Haken (15) aufweist und mittels einer Druckfeder in einer nicht einrastenden Stellung haltbar ist.

11. Planfilmkassette nach einem der Ansprüche 1 bis 10, dadurch gekennzeichnet, daß an jedem Oberteil (3-1, 3-2) eine die Beladung der Kassette mit Film anzeigende Abtasteinrichtung (16) vorgesehen ist.

## Claims

1. Flat film cassette for holding two films, having exposure windows formed on both flat sides, each of which windows can be closed by a respective light-protecting plate which covers the film in the cassette in a lightproof manner and can be inserted through slots, and having a central piece forming the two inner cassette portions, characterised in that on one side of the central piece (1) a first upper section (3-1) forming the one flat side is hinged and on the opposite side a second upper section (3-2), which is identical to the first upper section and forms the other flat side of the cassette, is hinged, in that locking elements (8) are provided on both of these sides, each of which interact with that upper section (3-2 or 3-1) which is hinged on the opposite side, and in that each of the two light-protecting plates (5) can be inserted in one of the upper sections (3-1, 3-2) through a lateral slot, the slots of the two upper sections being arranged in only one of the sides perpendicular to the two sides carrying the hinging means or locking elements.

2. Flat film cassette according to Claim 1, characterised in that the central piece (1) has holding elements (1d, 1e) for hinges (4) and locking elements (8) on two mutually opposing sides, these elements being arranged on both sides in an inverted position in relation to the other side.

3. Flat film cassette according to Claim 2, characterised in that the upper sections (3-1, 3-2) are connected to those hinges (4) which are attached to the hinge-holding elements (1d) of the central piece (1).

4. Flat film cassette according to one of Claims 1 to 3, characterised in that labyrinth passages (1f) are provided on the central piece (1), into which projections (3a) formed on the upper sections (3-1, 3-2) engage for sealing from light.

5. Flat film cassette according to Claim 1, characterised in that the light-protecting plate (5) has a gripping ledge (5a) to which a locking mechanism (12, 12a) interacting with the central piece (1) is fitted.

6. Flat film cassette according to Claim 5, characterised in that the locking mechanism has a clip (12) arranged elastically on the gripping ledge (5a), on which clip a hook (12a) is formed which grips the back of a locking ridge (1c) on the central piece (1).

7. Flat film cassette according to one of Claims 1 to 6, characterised in that the central piece has an essentially square base (1a) for receiving the film from both sides, which base corresponds to the film size and is somewhat larger than the exposure window (9) formed in each upper section (3-1, 3-2), and in that an elastic frame (7) is arranged on the inner surface of each upper section (3-1, 3-2) which surrounds the exposure window (9) and presses on the base (1a) of the central piece (1) in the closed state of the cassette.

8. Flat film cassette according to Claim 7, characterised in that the frame (7) consists of foam.

9. Flat film cassette according to one of Claims 1 to 8, characterised in that the light-protecting plate (5a, 6a) is connected to a sliding retainer (13) which, in its actuated state and when the light-protecting plate (5a, 6a) is inserted, prevents the light-protecting plate from being pulled out again from the upper section (3-1, 3-2).

10. Flat film cassette according to Claim 6 and 9, characterised in that the sliding retainer (13) is integrated in the gripping ledge (5a, 6a), has a hook (15) interacting with the locking ridge (1c) of the central piece (1) and can be held in a non-engaged position by means of a pressure spring.

11. Flat film cassette according to one of Claims 1 to 10, characterised in that a sensing device (16) indicating that the cassette is loaded with film is provided on each upper section (3-1, 3-2).

**Revendications**

1. Cassette pour film plan, pour recevoir deux films, comportant des fenêtres d'exposition de la lumière qui sont venues de forme sur les deux faces frontales et qui peuvent être fermées par, chacune, une plaque de protection à l'égard de la lumière que l'on peut enfiler par une fente et qui recouvre, de façon étanche à la lumière, le film qui se trouve dans la cassette, et comportant une pièce médiane formant les deux parties intérieures de la cassette, caractérisée en ce qu'à la partie médiane (1) sont articulées, d'un côté, une première partie supérieure (3-1) formant une face frontale et, du côté opposé, une seconde partie supérieure (3-2) formant l'autre face frontale de la cassette et de même forme que la première ; en ce que des éléments de fermeture (8) sont prévus de ces deux côtés et collaborent respectivement avec celle des parties supérieures (3-2 ou 3-1) qui est articulée du côté opposé ; et en ce que l'on peut introduire respectivement l'une des deux plaques de protection à l'égard de la lumière (5) dans l'une des parties supérieures (3-1, 3-2) par une fente latérale, étant précisé que les fentes des deux parties latérales sont disposées dans seulement l'un des côtés perpendiculaires aux deux côtés qui portent les moyens d'articulation ou les éléments de fermeture.

2. Cassette pour film plan selon la revendication 1, caractérisée en ce que la pièce médiane (1) présente, sur deux côtés opposés l'un à l'autre, des éléments de réception (1d, 1e) pour des charnières (4) et pour des éléments de fermeture (8), étant précisé que ces éléments sont disposés des deux côtés dans la position inversée par rapport à l'autre côté.

3. Cassette pour film plan selon la revendication 2, caractérisée en ce que les parties supérieures (3-1, 3-2) sont reliées par des charnières (4) qui sont suspendues aux éléments de réception des charnières (1d) de la pièce médiane (1).

4. Cassette pour film plan selon l'une des revendications 1 à 3, caractérisée en ce que sur la partie médiane (1) sont prévus des chemins à labyrinthe (1f) dans lesquels des saillies (3) venues de forme sur les parties supérieures (3-1, 3-2) pénètrent pour assurer l'étanchéité à l'égard de la lumière.

5. Cassette pour film plan selon la revendication 1, caractérisée en ce que la plaque de protection à l'égard de la lumière (5) présente un rebord de prise (5a) sur lequel est rapporté un mécanisme de verrouillage (12, 12a) qui collabore avec la pièce médiane (1).

6. Cassette pour film plan selon la revendication 5, caractérisée en ce que le mécanisme de verrouillage présente un étrier (12) qui est disposé élastiquement sur le rebord de prise (5a) et sur lequel est venu de forme un crochet (12a) qui vient saisir par derrière un rebord de fermeture (1c) de la pièce médiane (1).

7. Cassette pour film plan selon l'une des revendications 1 à 6, caractérisée en ce que la pièce médiane présente des deux côtés, pour recevoir le film, un fond (1a) essentiellement rectangulaire qui correspond à la dimension du film et qui est un peu plus grand que la fenêtre d'exposition à la lumière (9) venue de forme dans chaque partie supérieure (3-1, 3-2) ; et en ce que contre la surface intérieure de chaque partie supérieure (3-1, 3-2) est disposé un cadre (7), qui fait le tour de la fenêtre d'exposition à la lumière (9), qui est élastique et qui, à l'état fermé de la cassette, appuie sur le fond (1a) de la pièce médiane (1).

8. Cassette pour film plan selon la revendication 7, caractérisée en ce que le cadre (7) est en matériau mousse.

9. Cassette pour film plan selon l'une des revendications 1 à 8, caractérisée en ce que la plaque de protection à l'égard de la lumière (5a, 6a) est reliée à une encoche coulissante (13) qui, à l'état fermé et la plaque de protection à l'égard de la lumière (5a, 6a) étant insérée, interdit une nouvelle extraction de la plaque de protection à l'égard de la lumière hors de la partie supérieure (3-1, 3-2).

10. Cassette pour film plan selon les revendications 6 et 9, caractérisée en ce que l'encoche coulissante (13) fait partie du rebord de prise (5a, 6a), présente un crochet (15) qui collabore avec le rebord de fermeture (1c) de la pièce médiane (1) et peut être maintenue, à l'aide d'un ressort de compression, dans une position non encrantée.

11. Cassette pour film plan selon l'une des revendications 1 à 10, caractérisée en ce que sur chaque partie supérieure (3-1, 3-2) est prévu un dispositif de détection (16) indiquant si la cassette est chargée avec un film.

*Fig.1*

*Fig. 2*

*Fig. 3*

*Fig. 4*

*Fig.5*

*Fig.6*